# EUROPÄISCHE PATENTSCHRIFT

(11) **EP 2 662 753 B1**
(45) Veröffentlichungstag und Bekanntmachung des Hinweises auf die Patenterteilung: **17.10.2018**
(21) Anmeldenummer: 12167358.6
(22) Anmeldetag: 09.05.2012
(51) Int. Cl.: G06F 3/033

(54) **Stifthülse zur Aufnahme eines Stifts**
Pen barrel for holding a pen
Manchon pour crayon destiné à recevoir un crayon

(43) Veröffentlichungstag der Anmeldung: 13.11.2013
(73) Patentinhaber: Stepover GmbH, 70329 Stuttgart (DE)
(72) Erfinder: Günther, Andreas, 73760 Ostfildern (DE)
(74) Vertreter: Kramer Barske Schmidtchen Patentanwälte PartG mbB

(56) Entgegenhaltungen:
- EP-A2- 1 990 709
- DE-A1-102009 044 139
- US-A1- 2011 310 066
- US-B1- 6 361 232

## Beschreibung

### Technisches Gebiet

Die vorliegende Erfindung betrifft ein Schreibgerät zum Ausführen von handschriftlichen Benutzereingaben auf einem elektronischen Eingabefeld einer Signaturvorrichtung

Darüber hinaus betrifft die vorliegende Erfindung eine Signaturvorrichtung mit einem Gehäuse, einem elektronischen Eingabefeld und einem Schreibgerät der genannten Bauart zur handschriftlichen Benutzereingabe auf dem Eingabefeld.

### Hintergrund der Erfindung

Vorrichtungen zur Erfassung einer handschriftlichen Benutzereingabe umfassen im Allgemeinen ein an einer Wand zu befestigendes oder auf einer Unterlage aufzulegendes Gehäuse. Dieses Gehäuse weist auf der Gehäusevorderseite ein Eingabefeld auf, auf dem ein Benutzer mittels eines Stiftes handschriftliche Benutzereingaben wie beispielsweise Signaturen bzw. Unterschriften tätigen kann. Solche Vorrichtungen sind auch unter dem Begriff "Signaturpads" bekannt.

Für Signaturpads gibt es unterschiedliche Einsatzbereiche, die unterschiedliche Anforderungen an das Signaturpad und das Schreibgerät zur handschriftlichen Benutzereingabe stellen. So wird beim mobilen Einsatz das Signaturpad oftmals in einer Tasche transportiert, was ein transportsicheres Verstauen des Schreibgeräts erfordert. Im Gegensatz hierzu wird beispielsweise beim Schaltereinsatz das Signaturpad und das Schreibgerät praktisch nie transportiert, dafür aber sehr häufig benutzt.

Während sich dünne Schreibgeräte gut für den mobilen Einsatz eignen, da sie leicht im oder am Gehäuse transportsicher verstaut werden können, so liegen diese dünnen Stifte vergleichsweise schlecht in der Hand. Die schlechte Handhabbarkeit des dünnen Stiftes macht sich insbesondere beim häufigen Einsatz bemerkbar.

Kommt das Schreibgerät häufig zum Einsatz, so hat es sich bewährt, Schreibgeräte mit ergonomischer Form zu verwenden. Diese sind im Vergleich zu Schreibgeräten, die häufig transportsicher verstaut werden müssen, häufig dicker. Ein transportsicheres Verstauen ist mit diesen dickeren, ergonomischen Schreibgeräten nur bedingt möglich.

Ein weiteres Problem von Schreibgeräten für Signaturpads liegt darin, dass diese häufig nur schwierig gewechselt werden können, wenn diese abgenutzt oder beschädigt sind. Der Grund für den schwierigen Wechsel ist eine Kordel oder Schnüre, die den Stift mit dem Signaturpad verbindet, um diesen vor versehentlichem Verlieren und Diebstahl zu schützen. Das Problem des schwierigen Austauschs aufgrund von Abnutzung oder Beschädigung tritt insbesondere bei häufiger Verwendung auf, wie es beispielsweise bei der Verwendung der oben erwähnten ergonomischen Schreibgeräte oft der Fall ist.

Schreibgeräte für Signaturpads sind beispielsweise aus der DE 10 2009 044 139 A1 bekannt.

Eine mögliche Ausgestaltung eines Schreibgerätes offenbart die US 2011/0310066 A1. Diese Druckschrift offenbart einen Digitalstift mit einer Doppelfunktion. Die erste Funktion besteht darin, dass unter Verwendung einer ausgeklappten Kappe, Eingaben auf einer Eingabefläche gemacht werden können. Die zweite Funktion besteht darin, dass der Digitalstift mittels einer aufgenommenen Tintenkartusche auch als einfacher Marker benutzt werden kann.

Aus der US 6 361 232 B1 ist ein Eingabestift für eine tragbare elektronische Eingabevorrichtung mit elektronischem Eingabefeld bekannt. Der Eingabestift besitzt eine federnd gelagerte Stiftspitze, die dazu ausgebildet ist, handschriftliche Benutzereingaben auf dem elektronischen Eingabefeld auszuführen. Der Eingabestift weist eine Aufnahmekammer auf, in der ein Kugelschreiber untergebracht ist. Der Kugelschreiber ist dazu ausgebildet, auf Papier zu schreiben. Eine Eingabe auf dem elektronischen Eingabefeld ist damit nicht möglich.

Ein der vorliegenden Erfindung zu Grunde liegendes technisches Problem mag darin bestehen, eines oder mehrere der genannten Probleme zu beseitigen oder zumindest besser zu lösen.

### Darstellung der Erfindung

Gemäß der vorliegenden Erfindung wird ein Schreibgerät zum Ausführen von handschriftlichen Benutzereingaben auf einem Eingabefeld einer Signaturvorrichtung offenbart. Das Schreibgerät umfasst einen Stift mit einer Stiftspitze, die zum Ausführen von handschriftlichen Benutzereingaben auf dem elektronischen Eingabefeld ausgebildet ist. Das Schreibgerät umfasst ferner eine Stifthülse mit einer Hülsenspitze zur handschriftlichen Benutzereingabe auf dem elektronischen Eingabefeld auf. Die Hülsenspitze weist eine im Wesentlichen gleiche Außenform auf wie die Stiftspitze des Stifts. In der Stifthülse ist eine Aufnahmekammer vorhanden, die dazu ausgebildet ist, den Stift aufzunehmen und zu halten.

Der Erfindung liegt der Gedanke zu Grunde, ein in der Benutzerfreundlichkeit verbessertes, auf einfache Weise austauschbares Schreibgerät zur handschriftlichen Benutzereingabe auf einem Eingabegerät zur Verfügung zu stellen. So kann bei häufigem Einsatz, zum Beispiel am Schalter, ein nunmehr ergonomisches Schreibgerät verwendet werden, das bei Abnutzung infolge des häufigen Gebrauchs auf einfache Weise gewechselt werden kann. In Einsatzbereichen, in denen das Schreibgerät vielfach transportsicher verstaut werden muss, kann wie gewohnt nur der Stift als Schreibgerät verwendet werden. Der Stift lässt sich auf einfache Art und Weise im oder am Gehäuse des Signaturpads unterbringen. Ein Hersteller kann somit ein Signaturpad mit Schreibgerät anbieten, welches nicht schon im Vorhinein aufgrund eines dicken oder dünnen Schreibgeräts für bestimmte Einsatzbereiche besser geeignet ist. Durch das Vorsehen eines vergleichsweise dünnen Stiftes und einer Stifthülse wird dem Benutzer die Möglichkeit gegeben, das für den Einsatzbereich geeignete und vom Benutzer bevorzugte Schreibgerät zu wählen.

Erfindungsgemäß kann die handschriftliche Benutzereingabe auf einem Eingabefeld durch die Hülsenspitze der Stifthülse erfolgen. Diese Hülsenspitze der Stifthülse ist der Stiftspitze des Stiftes nachempfunden. Ist die Hülsenspitze der Stifthülse durch häufigen Gebrauch abgenutzt oder durch unsachgemäßen Gebrauch beschädigt, so kann die Stifthülse des Schreibgeräts einfach gewechselt werden. Die Stifthülse fungiert somit als eine Art austauschbare "Außenmine".

Gemäß einer weiteren beispielhaften Ausführungsform der vorliegenden Erfindung weist die Stifthülse ein Befestigungsmittel zur lösbaren Sicherung des Stiftes in der Stifthülse auf. Somit ist es möglich, den Stift in die Stifthülse einzuschieben und zu befestigen, so dass der Stift nicht herausfallen bzw. herausgezogen werden kann. Beispielhaft ist es möglich, das Befestigungsmittel an einem der Hülsenspitze gegenüberliegenden Ende der Stifthülse anzuordnen.

In einer weiteren beispielhaften Ausführungsform der vorliegenden Erfindung ist das Befestigungsmittel der Stifthülse als eine Rastvorrichtung ausgebildet. Diese Rastvorrichtung ermöglicht eine lösbare Verbindung mit mindestens einem entsprechenden Rasthaken des Stiftes. Als weiteres Beispiel ist es auch möglich, das Befestigungsmittel der Stifthülse als ein Innengewinde auszubilden. Dieses Innengewinde in der Aufnahmekammer der Stifthülse kann dann eine lösbare Verbindung mit einem Außengewinde des Stiftes eingehen.

Gemäß einem weiteren Aspekt der vorliegenden Erfindung ist eine Signaturvorrichtung offenbart, die ein Schreibgerät der hier offenbarten Art, ein Gehäuse und ein elektronisches Eingabefeld umfasst. Das Schreibgerät umfasst eine Stifthülse und einen Stift, der in eine Aufnahmekammer der Stifthülse einschiebbar ist. Die Stifthülse weist eine Hülsenspitze zur handschriftlichen Benutzereingabe auf dem Eingabefeld auf. Der in die Aufnahmekammer der Stifthülse einschiebbare Stift ist ebenfalls zur handschriftlichen Benutzereingabe auf einem Eingabefeld ausgebildet. Das Eingabefeld ist an einer Vorderseite des Gehäuses vorgesehen und dazu ausgebildet, handschriftliche Benutzereingaben, die mittels Stift und der Stifthülse des Schreibgeräts getätigt werden, zu empfangen.

In einer beispielhaften Ausführungsform umfasst die Vorrichtung ferner mindestens eine Haltevorrichtung. Diese Haltevorrichtung ist dazu ausgebildet, sowohl die Stiftspitze des Stiftes als auch die Hülsenspitze der Stifthülse zu halten. Dies wird dadurch ermöglicht, dass die Außenform der Stiftspitze und der Hülsenspitze im Wesentlichen gleich sind. So kann dieselbe Haltevorrichtung sowohl für den Stift als auch für ein Schreibgerät mit Stifthülse verwendet werden.

Das elektronische Eingabefeld ist dazu ausgebildet, handschriftliche Benutzereingaben durch das Schreibgerät zu erfassen. So erfasst die Elektronik, solange das Schreibgerät auf dem elektronischen Eingabefeld geführt wird, kartesische x-, y-Koordinaten der Schreibgerätespitze auf dem elektronischen Eingabefeld mit zugehörigem Schreibdruck und Zeitangabe.

In einer zur soeben beschriebenen alternativen beispielhaften Ausfuhrungsform weisen die Stifthülse und/oder der Stift eine Elektronik auf. Die Elektronik ermöglicht ein Erfassen von handschriftlichen Benutzereingaben auf einem Eingabefeld, welches beispielsweise als eine Glasoberfläche, eine Plastikoberfläche, ein Bildschirm, oder ähnliches ausgebildet sein kann. Zur Versorgung der Elektronik mit Strom kann in der Stifthülse und/oder im Stift eine Batterie oder ein Akkumulator vorgesehen sein. Eine in der Stifthülse vorgesehene Elektronik kann es zudem ermöglichen, Stifthülsen mit unterschiedlichen Funktionalitäten bereitzustellen. So sind beispielsweise Stifthülsen mit und ohne Druckstufen und unterschiedlichen Genauigkeiten denkbar. Ferner kann es beispielsweise möglich sein, am Stift oder der Stifthülse Eingabemittel, wie zum Beispiel Eingabetasten und Schalter, vorzusehen, über die der Benutzer Einstellungen vornehmen kann. Diese Einstellungen können beispielsweise die soeben beschrieben Funktionalitäten betreffen, die somit auch umschaltbar in einer Stifthülse verfügbar wären. Die Elektronik der Stifthülse kann alternativ oder zusätzlich eine Kodierung umfassen. Diese Kodierung kann durch ein geeignetes Gerät ausgelesen werden. So kann es sich bei der Kodierung beispielsweise um einen RFID-Chip handeln. Denkbar ist, dass die Kodierung Informationen hinsichtlich der Schreibcharakteristik, zum Beispiel Farbe, Strichdicke, und/oder personenbezogene Daten, wie zum Beispiel digitale Zertifikate, beinhalten. In diesem Kontext kann der Stift auch lediglich als Haltestift für die Stifthülse ausgebildet sein. Ein solcher Haltestift muss nicht selbst zum Ausführen von handschriftlichen Benutzereingaben auf dem Eingabefeld ausgebildet sein.

### Kurze Beschreibung der Zeichnungen

Fig. 1 zeigt eine Draufsicht eines Ausführungsbeispiels eines erfindungsgemäßen Schreibgeräts zur handschriftlichen Benutzereingabe auf einem Eingabefeld,
Fig. 2 zeigt ein Schnittbild durch das in der Fig. 1 gezeigte Ausführungsbeispiel eines erfindungsgemäßen Schreibgeräts zur handschriftlichen Benutzereingabe auf einem Eingabefeld,
Fig. 3 zeigt ein Schnittbild durch das hintere Ende eines Ausführungsbeispiels eines erfindungsgemäßen Schreibgeräts,
Fig. 4 zeigt ein Ausführungsbeispiel eines Befestigungsmittels einer Stifthülse gemäß der vorliegenden Erfindung.
Fig. 5 zeigt ein Schnittbild eines Ausführungsbeispiel gemäß der vorliegenden Erfindung in dem eine Haltevorrichtung ein Schreibgerät hält, und
Fig. 6 zeigt eine Draufsicht auf ein Ausführungsbeispiel gemäß der vorliegenden Erfindung umfassend ein Signaturpad mit Haltevorrichtung und Schreibgerät.

### Detaillierte Beschreibung beispielhafter Ausführungsformen

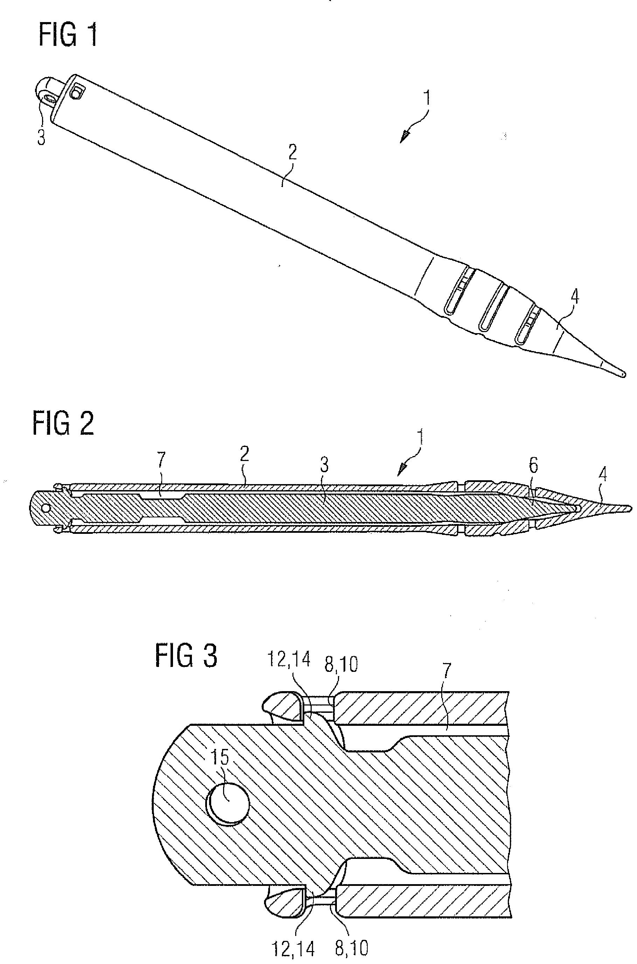

Die Fig. 1 zeigt eine beispielhafte Ausführungsform des vorliegenden erfindungsgemäßen Schreibgeräts 1. Das Schreibgerät 1 umfasst eine Stifthülse 2 und einen Stift 3. Der Stift 3 befindet sich in der Stifthülse 2. Zur handschriftlichen Benutzereingabe auf einem Eingabefeld besitzt die Stifthülse 2 eine Hülsenspitze 4.

Wie in der Fig. 2 gezeigt, ist der Stift 3 in der Aufnahmekammer 7 der Stifthülse aufgenommen. Der Stift 3 besitzt ferner, wie auch die Stifthülse 2, eine Stiftspitze 6 zur handschriftlichen Benutzereingabe auf einem Eingabefeld. Somit kann der Stift 3 erfindungsgemäß auch ohne Stifthülse 2 als Schreibgerät verwendet werden. Hiermit wird den unterschiedlichen Anforderungen hinsichtlich Benutzungshäufigkeit und Transportierbarkeit des Schreibgeräts Rechnung getragen.

Die Stiftspitze 6 des Stifts 3 besitzt eine ähnliche Außenform wie die Hülsenspitze 4 der Stifthülse 2. Zum einen verändert sich dadurch die Schreibcharakteristik des Schreibgeräts 1 im Vergleich zur Benutzung des einzelnen Stifts 3 nicht, zum anderen ist die Formähnlichkeit im Hinblick auf eine später erläuterte, gemeinsame Haltevorrichtung 16 für das Schreibgerät 1 bzw. den Stift 3 sinnvoll.

Alternativ zu dem Stift 3 mit Stiftspitze 6, der zur handschriftlichen Benutzereingabe auf einem Eingabefeld ausgebildet ist, kann es sich beim Stift 3 auch um einen Haltestift handeln, der insbesondere zum Halten der Stifthülse 2 ausgebildet ist, nicht aber zur handschriftlichen Benutzereingabe auf einem Eingabefeld.

Aus der Fig. 3, die eine Vergrößerung des hinteren Endes des Schnittbilds des Schreibgeräts 1 der Fig. 2 zeigt, sind das Befestigungsmittel 8 der Stifthülse 2 und das Befestigungsmittel 12 des Stiftes 3 ersichtlich. In der gezeigten beispielhaften Ausführungsform der vorliegenden Erfindung ist das Befestigungsmittel 8 als eine Rastvorrichtung 10 und das Befestigungsmittel 12 als Rasthaken 14 ausgebildet. Der Stift 3 kann somit, nachdem er in die Aufnahmekammer 7 der Stifthülse 2 eingeschoben worden ist, in dieser mittels Rasthaken 14 in der Rastvorrichtung 10 eingerastet werden. Die Befestigungsmittel 8 und 12 ermöglichen somit die lösbare Sicherung des Stiftes 3 in der Aufnahmekammer 7 der Stifthülse 2.

Die Stifthülse 2 ist beispielsweise aus einem Kunststoff hergestellt. Der Kunststoff ermöglicht die elastische Verformung der Rasthaken 14 beim Einrasten des Stiftes 3 in die Rastvorrichtung 10 der Stifthülse 2. Ein Einrasten kann beispielsweise durch ein Drehen des Stiftes 2, der sich bereits in der Aufnahmekammer 7 befindet, ausgelöst werden. Alternativ oder zusätzlich kann ein Einrasten beispielsweise durch zusätzlichen Druck auf ein hinteres Ende des Stiftes 2, der sich bereits in der Aufnahmekammer 7 der Stifthülse 2 befindet, ausgelöst werden.

Alternativ zu der dargestellten Rastvorrichtung 10 und den Rasthaken 14, sind ebenfalls andere Ausführungsformen der Befestigungsmittel 8 und 12 denkbar. Zur lösbaren Sicherung kann der Stift 3 beispielsweise ein nicht dargestelltes Außengewinde aufweisen, welches es dem Benutzer ermöglicht, den Stift 3 beim oder nach dem Einschieben in die Aufnahmekammer 7 der Stifthülse 2 in ein nicht dargestelltes Innengewinde der Aufnahmekammer 7 einzuschrauben.

Durch die Öffnung 15 des Stiftes 3 kann eine Kordel oder eine Schnüre geführt werden, um den Stift 3, und somit das Schreibgerät 1, mit einer Signaturvorrichtung 18 zu verbinden.

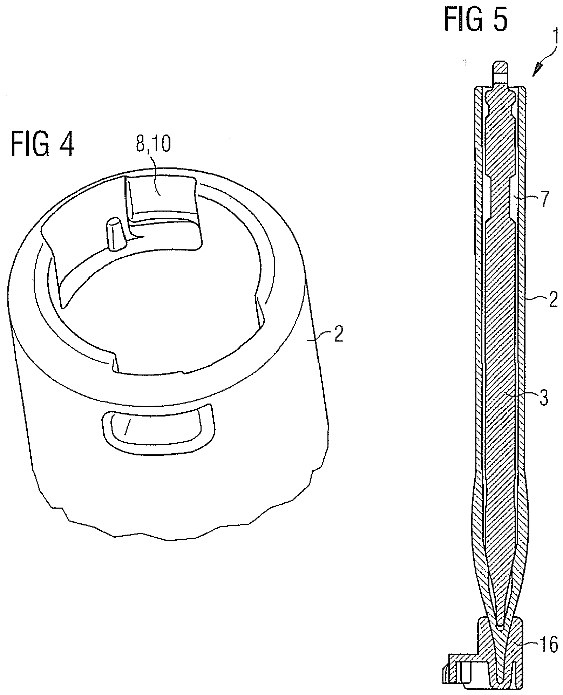

Die Fig. 4 zeigt ein Ausführungsbeispiel des Befestigungsmittels 8 der Stifthülse 2. Das Befestigungsmittel 8 ist als Rastvorrichtung 10 ausgebildet. Ein Stift 3 mit Rasthaken 14 kann in die Stifthülse 2 eingeschoben werden. Danach erfolgt eine Drehung des Stiftes 3 bzw. der Stifthülse 2 zum Einrasten der Rasthaken 14 in die Rastvorrichtung 10. Zum Lösen des Stiftes 3 aus der Rastvorrichtung 10 der Stifthülse 2 müssen die Rasthaken 14 des Stifts 3 zunächst aus der Rastvorrichtung 10 gedreht werden. Der Stift 3 kann dann aus der Aufnahmekammer 7 der Stifthülse 2 gezogen werden.

In der Fig. 5 ist dargestellt, wie das erfindungsgemäße Schreibgerät 1, bestehend aus Stifthülse 2 und Stift 3, in einer Haltevorrichtung 16 gehalten wird. Die Haltevorrichtung 16 hält das Schreibgerät 1 an der Hülsenspitze 4 der Stifthülse 2 mittels Formschluss.

Durch die Formähnlichkeit der Hülsenspitze 4 der Stifthülse 2 zur Stiftspitze 6 des Stiftes 3 kann durch dieselbe Haltevorrichtung 16 sowohl der Stift 3 an seiner Stiftspitze 6 als auch die Stifthülse 2 an ihrer Hülsenspitze 4 mittels Formschluss in der Haltevorrichtung 16 gehalten werden.

Die Haltevorrichtung 16 weist eine Haltekammer auf, die als Innenkonus ausgebildet ist. Die konusförmige Haltekammer ermöglicht das Halten der Stiftspitze 6 bzw. der Hülsenspitze 4 mittels Formschluss.

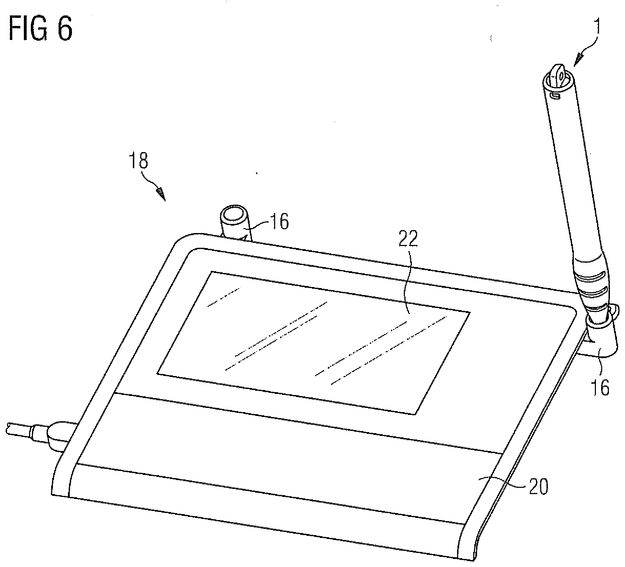

Die Fig. 6 zeigt eine Signaturvorrichtung 18. Die Signaturvorrichtung 18 umfasst ein Gehäuse 20, an dessen Vorderseite sich ein Eingabefeld 22 für handschriftliche Benutzereingaben befindet. Ferner weist die Signaturvorrichtung 18 beispielhaft zwei Haltevorrichtungen 16 auf. In einer Haltevorrichtung 16 wird das Schreibgerät 1 an einer Hülsenspitze 4 gehalten. Selbstverständlich kann die Anzahl und/oder Anordnung der Haltevorrichtung 16 in anderen Ausführungsformen verglichen zu dem in Fig. 6 dargestellten Ausführungsbeispiel variieren.

Das Schreibgerät 1 hat den Vorteil, dass es sowohl für häufigen Gebrauch als auch für häufigen Transport geeignet sein kann. Eine Abnutzung des Schreibgeräts 1 durch häufigen Gebrauch kann durch einfachen Wechsel der Stifthülse 2 begegnet werden. Der Benutzer profitiert bei häufigem Gebrauch zudem von der ergonomischen Form des Schreibgeräts 1, der im Vergleich zum dünnen Stift 3 besser in der Hand liegt. Ferner kann bei häufigen Transporten nur Stift 3 verwendet werden, der sich ohne großen Raumbedarf transportsicher im oder am Gehäuse 20 verstauen lässt.

Ferner kann das Schreibgerät 1 für eine Vielzahl von stiftbedienbaren Geräten verwendet werden. Diese Geräte umfassen insbesondere solche, an denen ein Schreibgerät befestigt ist und/oder Geräte, die mobil betrieben werden. Zu diesen Geräten zählen unter anderem Signaturpads, stiftbedienbare Tabletcomputer, stiftbedienbare Smartphones und stiftbedienbare Handheld-Konsolen.

## Patentansprüche

1. Schreibgerät (1) zum Ausführen von handschriftlichen Benutzereingaben auf einem elektronischen Eingabefeld (22) einer Signaturvorrichtung (18), mit:
a) einem Stift (3) mit einer Stiftspitze (6), die zum Ausführen von handschriftlichen Benutzereingaben auf dem elektronischen Eingabefeld (22) ausgebildet ist,
b) einer Stifthülse (2) mit:
b1) einer Hülsenspitze (4), die dazu ausgebildet ist, handschriftliche Benutzereingaben auf dem elektronischen Eingabefeld (22) auszuführen und die eine im Wesentlichen gleiche Außenform aufweist wie die Stiftspitze (6) des Stiftes (3), und
b2) einer in der Stifthülse (2) vorhandenen Aufnahmekammer (7), die dazu ausgebildet ist, den Stift (3) aufzunehmen und zu halten.

2. Schreibgerät nach Anspruch 1, bei dem die Stifthülse (2) ein Befestigungsmittel (8) zur lösbaren Sicherung des Stiftes (3) in der Aufnahmekammer (7) der Stifthülse (2) aufweist.

3. Schreibgerät nach Anspruch 2, bei dem das Befestigungsmittel (8) an einem der Hülsenspitze (4) gegenüberliegenden Ende der Stifthülse (2) angeordnet ist.

4. Schreibgerät nach Anspruch 2 oder 3, bei dem das Befestigungsmittel (8) der Stifthülse (2) als eine Rastvorrichtung (10) ausgebildet ist, um eine lösbare Verbindung mit mindestens einem entsprechenden Rasthaken (14) des Stiftes (3) einzugehen.

5. Schreibgerät nach Anspruch 2 oder 3, **dadurch gekennzeichnet, dass** das Befestigungsmittel (8) der Stifthülse (2) als ein Innengewinde in der Stifthülse (2) ausgebildet ist, um eine lösbare Verbindung mit einem Außengewinde des Stiftes (3) einzugehen.

6. Schreibgerät nach Anspruch 1, bei dem der Stift (3) ein Befestigungsmittel (12) zur lösbaren Sicherung des Stiftes (3) in der Aufnahmekammer (7) für den Stift (3) der Stifthülse (2) aufweist.

7. Schreibgerät nach Anspruch 6, bei dem das Befestigungsmittel (12) des Stiftes (3) als mindestens ein Rasthaken (14) ausgebildet ist, um eine lösbare Verbindung mit einer entsprechenden Rastvorrichtung (10) der Stifthülse (2) einzugehen.

8. Schreibgerät nach Anspruch 6, bei dem das Befestigungsmittel (12) des Stiftes (3) als Außengewinde zur lösbaren Verbindung mit einem entsprechenden Innengewinde der Stifthülse (2) ausgebildet ist.

9. Signaturvorrichtung (18) mit:
- einem Schreibgerät (1) nach einem der Ansprüche 1-8,
- einem Gehäuse (20),
- einem elektronischen Eingabefeld (22), das an einer Vorderseite des Gehäuses (20) vorgesehen und dazu ausgebildet ist, mittels des Stifts (3) und der Stifthülse (2) des Schreibgeräts (1) ausgeführte handschriftliche Benutzereingaben zu empfangen.

10. Signaturvorrichtung (18) nach Anspruch 9, ferner mit:
mindestens einer Haltevorrichtung (16), die dazu ausgebildet ist, sowohl die Stiftspitze (6) als auch die Hülsenspitze (4) zu halten.

## Claims

1. A writing implement (1) for inputting handwritten user data in an electronic input field (22) of a signature device (18), comprising:
a) a stylus (3) having a stylus tip (6) configured to input handwritten user data in the electronic input field (22);
b) a stylus barrel (2) comprising:
b1) a barrel tip (4) configured to input handwritten user data in the electronic input field (22) and which is of essentially the same outer shape as the stylus tip (6) of the stylus (3); and
b2) an accommodating chamber (7), which is present in the stylus barrel (2) and is configured to accommodate, and retain, the stylus (3).

2. The writing implement according to claim 1, wherein the stylus barrel (2) has a fastening means (8) for securing the stylus (3) in a releasable manner in the accommodating chamber (7) of the stylus barrel (2).

3. The writing implement according to claim 2, wherein the fastening means (8) is arranged at an end of the stylus barrel (2) which is located opposite the barrel tip (4).

4. The writing implement according to claim 2 or 3, wherein the fastening means (8) of the stylus barrel (2) is designed as a latching device (10), in order to undergo releasable connection to at least one corresponding latching hook (14) of the stylus (3).

5. The writing implement according to claim 2 or 3, wherein the fastening means (8) of the stylus barrel (2) is designed as an internal thread in the stylus barrel (2), in order to undergo releasable connection to an external thread of the stylus (3).

6. The writing implement according to claim 1, wherein the stylus (3) has a fastening means (12) for securing the stylus (3) in a releasable manner in the accommodating chamber (7) for the stylus (3) of the stylus barrel (2).

7. The writing implement according to claim 6, wherein the fastening means (12) of the stylus (3) is designed as at least one latching hook (14), in order to undergo releasable connection to a corresponding latching device (10) of the stylus barrel (2).

8. The writing implement according to claim 6, wherein the fastening means (12) of the stylus (3) is designed as an external thread for releasable connection to a corresponding internal thread of the stylus barrel (2).

9. A signature device (18) having:
- a writing implement (1) according to any one of claims 1-8;
- a housing (20);
- an electronic input field (22), which is provided on a front side of the housing (20) and is designed to capture handwritten user data input by means of the stylus (3) and the stylus barrel (2) of the writing implement (1).

10. The signature device (18) according to claim 9, further comprising:
at least one retaining device (16) configured to retain both the stylus tip (6) and the barrel tip (4).

## Revendications

1. Instrument d'écriture (1) pour effectuer des entrées manuscrites d'utilisateur sur un champ d'entrée électronique (22) d'un dispositif de signature (18), avec :
a) un stylet (3) avec une pointe de stylet (6) qui est réalisé pour effectuer des entrées manuscrites d'utilisateur sur le champ d'entrée électronique (22),
b) un manchon de stylet (2) avec :
b1) une pointe de manchon (4), qui est réalisée pour effectuer des entrées manuscrites d'utilisateur sur le champ d'entrée électronique (22) et qui présente une forme extérieure sensiblement identique à celle de la pointe de stylet (6) du stylet (3), et
b2) une chambre de logement (7) présente dans le manchon de stylet (2), qui est réalisée pour loger et tenir le stylet (3).

2. Instrument d'écriture selon la revendication 1, dans lequel le manchon de stylet (2) comporte un moyen de fixation (8) pour bloquer de manière amovible le stylet (3) dans la chambre de logement (7) du manchon de stylet (2).

3. Instrument d'écriture selon la revendication 2, dans lequel le moyen de fixation (8) est agencé à une extrémité du manchon de stylet (2) qui est à l'opposé de la pointe de manchon (4).

4. Instrument d'écriture selon la revendication 2 ou 3, dans lequel le moyen de fixation (8) du manchon de stylet (2) est réalisé sous forme de dispositif d'enclenchement (10) afin de créer une liaison amovible avec au moins un crochet d'enclenchement correspondant (14) du stylet (3).

5. Instrument d'écriture selon la revendication 2 ou 3, **caractérisé en ce que** le moyen de fixation (8) du manchon de stylet (2) est réalisé sous forme de filetage intérieur dans le manchon de stylet (2) afin de créer une liaison amovible avec un filetage extérieur du stylet (3).

6. Instrument d'écriture selon la revendication 1, dans lequel le stylet (3) comporte un moyen de fixation (12) pour la liaison amovible du stylet (3) dans la chambre de logement (7) pour le stylet (3) du manchon de stylet (2).

7. Instrument d'écriture selon la revendication 6, dans lequel le moyen de fixation (12) du stylet (3) est réalisé sous la forme d'au moins un crochet d'enclenchement (14) afin de créer une liaison amovible avec un dispositif d'enclenchement correspondant (10) du manchon de stylet (2).

8. Instrument d'écriture selon la revendication 6, dans lequel le moyen de fixation (12) du stylet (3) est réalisé sous forme de filetage extérieur pour la liaison amovible avec un filetage intérieur correspondant du manchon de stylet (2).

9. Dispositif de signature (18) avec :
- un instrument d'écriture (1) selon l'une quelconque des revendications 1 à 8,
- un boîtier (20),
- un champ d'entrée électronique (22), qui est prévu au niveau d'une face avant du boîtier (20) et qui est réalisé pour recevoir des entrées manuscrites d'utilisateur effectuées au moyen du stylet (3) et du manchon de stylet (2) de l'instrument d'écriture (1).

10. Dispositif de signature (18) selon la revendication 9, avec en outre :
au moins un dispositif de retenue (16), qui est réalisé pour tenir aussi bien la pointe de stylet (6) que la pointe de manchon (4).
